# EUROPEAN PATENT APPLICATION

(11) **EP 4 454 917 A1**
(43) Date of publication of application: **30.10.2024**
(21) Application number: 22910923.6
(22) Date of filing: 08.12.2022
(51) Int. Cl.: B60K 1/04, B60L 9/18, B60L 50/60, B60L 50/64, B60L 58/10, H01M 10/613, H01M 10/617, H01M 10/625, H01M 10/6563, H01M 50/244, H01M 50/249, H02M 7/48

(54) **ELECTRIC WORK VEHICLE**

(30) Priority: 24.12.2021 JP 2021211648; 24.12.2021 JP 2021211649; 24.12.2021 JP 2021211650
(71) Applicant: Kubota Corporation, Osaka 556-8601 (JP)
(72) Inventor: SHIMOIKE Yuki, Sakai-shi, Osaka 590-0908 (JP); KAWABATA Shinichi, Sakai-shi, Osaka 590-0908 (JP); MITSUI Kenji, Sakai-shi, Osaka 590-0908 (JP); MATSUFUJI Katsumi, Sakai-shi, Osaka 590-0908 (JP); MIZOGUCHI Yoshiki, Sakai-shi, Osaka 590-0908 (JP); INOUE Yuta, Sakai-shi, Osaka 590-0908 (JP)
(74) Representative: Müller-Boré & Partner Patentanwälte PartG mbB
(86) International application number: PCT/JP2022/045287
(87) International publication number: WO 2023/120212

(57) **Abstract**

A battery (4) includes: a housing case (1) in which a plurality of battery modules (6) are housed; a pre-charge part (67) configured to perform processing for gradually supplying power to an inverter at a start of power supply from the battery (4) to the inverter; and a discharge part (68) configured to perform processing for discharging power remaining in the inverter in response to power supply from the battery (4) to the inverter being shut off. The pre-charge part (67) and the discharge part (68) are provided in the housing case (1).

## Description

### Technical Field

The present invention relates to an electric work vehicle configured such that a travel device is driven by a motor. The present invention also relates to, in an electric work vehicle that includes a battery, a motor driven by power supplied from the battery, and a travel device driven by the motor, a configuration for cooling the battery. The present invention also relates to, in an electric work vehicle that includes a battery, a motor driven by power supplied from the battery, and a travel device driven by the motor, a configuration of the battery.

### Background Art

### Background Art 1

As disclosed in Patent Document 1, some electric work vehicles include a battery and an inverter supplied with power from the battery and have a configuration in which a motor is driven by power supplied from the inverter.

### Background Art 2

As disclosed in Patent Document 2, some electric work vehicles of an air-cooling type include a cooling fan provided outside of a battery installed in a body, so that an air flow is generated outside of the battery by the cooling fan to cool the battery.

### Background Art 3

As disclosed in Patent Document 2, some electric work vehicles have a configuration in which the entirety of a battery is constituted by stacks with a plurality of battery modules coupled to each other, and the stacks are lined up adjacent to each other and are housed in a housing case.

### Prior Art Documents

### Patent Documents

Patent Document 1: JP 2021-955A
Patent Document 2: JP 2021-953A

### Disclosure of the Invention

### Problem to be Solved by the Invention

### Problem 1

A problem for "Background Art 1" is as follows.

Such an electric work vehicle as described above may be provided with a pre-charge part and a discharge part. The pre-charge part performs processing for gradually supplying power to the inverter at a start of power supply from the battery to the inverter. In response to power supply from the battery to the inverter being shut off, the discharge part performs processing for discharging power remaining in the inverter.

The present invention aims to realize a configuration of an electric work vehicle in which a pre-charge part and a discharge part are provided in a compact manner.

### Problem 2

A problem for "Background Art 2" is as follows.

In contrast to an electric work vehicle of an air-cooling type in which the outer side of the battery is cooled by air as described above, an electric work vehicle of an air-cooling type in which the inner side of the battery is cooled by air has been proposed.

The present invention aims to realize a configuration of an electric work vehicle in which the inner side of a battery is efficiently cooled by air.

### Problem 3

A problem for "Background Art 3" is as follows.

When an electric work vehicle travels on an uneven surface of the ground, vibration during the travel may be transmitted from the housing case to the stacks and the stacks (battery modules) may vibrate against the housing case. Accordingly, there is room for improvement in suppressing the vibration of the stacks (battery modules) against the housing case.

The present invention aims to realize a configuration of an electric work vehicle in which the vibration of stacks (battery modules) against a housing case is suppressed.

### Means for Solving Problem

### Solution 1

Solutions for "Problem 1" are as follows.

The present invention is directed to an electric work vehicle comprising: a battery; an inverter configured to be supplied with power from the battery; a motor configured to be driven by power from the inverter; and a travel device configured to be driven by the motor,
wherein the battery includes:
   a housing case in which a plurality of battery modules are housed;
   a pre-charge part configured to perform processing for gradually supplying power to the inverter at a start of power supply from the battery to the inverter; and
   a discharge part configured to perform processing for discharging power remaining in the inverter in response to power supply from the battery to the inverter being shut off, and
the pre-charge part and the discharge part are provided in the housing case.

According to the present invention, when the battery includes the housing case in which the plurality of battery modules are housed, since the pre-charge part and the discharge part are provided in the housing case, the battery realizes a compact layout of the housing case in which the plurality of battery modules are housed, the pre-charge part, and the discharge part. This is advantageous in terms of simplification of the structure.

According to the present invention, there is no need of providing the pre-charge part and the discharge part at positions separate from the battery, which is also advantageous in terms of saving a space near the battery in the electric work vehicle.

In the present invention, preferably, the pre-charge part and the discharge part are provided in an upper portion of the housing case.

According to the present invention, since the pre-charge part and the discharge part are provided in an upper portion of the housing case, heat generated in the pre-charge part and the discharge part easily escapes upward, which is advantageous in terms of the heat dissipation of the battery.

In the present invention, preferably, the pre-charge part and the discharge part are provided at a rear end of the housing case.

According to the present invention, since the pre-charge part and the discharge part are provided at the upper rear end of the housing case, and heat generated in the pre-charge part and the discharge part easily escapes upward and rearward, which is advantageous in terms of the heat dissipation of the battery.

In the present invention, preferably, the housing case is quadrangle-shaped when viewed in a plan view, and
the pre-charge part and the discharge part are provided in a right or left corner at the rear end of the housing case.

According to the present invention, since the pre-charge part and the discharge part are provided in a right or left corner at the upper rear end of the housing case, and heat generated in the pre-charge part and the discharge part easily escapes upward, rearward, and sideward, which is advantageous in terms of the heat dissipation of the battery.

In the present invention, preferably, the housing case includes, on a top thereof, a housing cover covering the pre-charge part and the discharge part.

According to the present invention, since the housing cover covering the pre-charge part and the discharge part is provided in an upper portion of the housing case, the pre-charge part and the discharge part are protected, which is advantageous in terms of preventing damage to the pre-charge part and the discharge part.

### Solution 2

Solutions for "Problem 2" are as follows.

The present invention is directed to an electric work vehicle comprising: a battery; a motor configured to be driven by power from the battery; and a travel device configured to be driven by the motor,
wherein the battery includes:
a stack in which a plurality of battery modules are coupled to each other;
a housing case in which a plurality of the stacks are housed, the stacks being lined up adjacent to each other at a predetermined gap; and
a fan device that has a ventilation hole formed on an outer side of the housing case at a position facing the gap, the fan device being configured to be able to suck air in the housing case or supply air to the housing case via the ventilation hole.

According to the present invention, the stack in which a plurality of battery modules are coupled to each other is included in the battery, and a plurality of the stacks are housed in the housing case.

In this case, the plurality of stacks are housed in the housing case while being lined up adjacent to each other at a predetermined gap, and thus air easily flows through the gap between adjacent stacks.

According to the present invention, the fan device is provided, and the ventilation hole of the fan device is formed on the outer side of the housing case at a position facing the gap between adjacent stacks, so that the ventilation hole is close to the gap between the adjacent stacks.

With this, when air is sucked (supplied) by the fan device, air in the gap between adjacent stacks is efficiently sucked (air is efficiently supplied to the gap between adjacent stacks) through the ventilation hole of the fan device, and flows in the gap between adjacent stacks, allowing the stacks to be efficiently cooled with the air and allowing the interior of the battery to be efficiently cooled with the air.

In the present invention, preferably, the housing case includes an opening through which air is passable, the opening being provided at a position facing a terminal of the battery modules.

According to the present invention, when air in the gap between adjacent stacks is sucked by the fan device, air outside the housing case is introduced into the housing case.

Since the opening is provided at a position facing the terminal of the battery module of the housing case, air outside the housing case is passed through the opening of the housing case and is introduced into the housing case while passing by the terminal of the battery modules, allowing the terminal of the battery modules to be efficiently cooled. This is advantageous in terms of cooling the interior of the battery.

According to the present invention, when air is supplied into the gap between adjacent stacks by the fan device, air in the housing case is pushed out to the outside of the housing case.

Since the opening is provided at a position facing the terminal of the battery modules of the housing case, air in the housing case is passed by the terminal of the battery module and is pushed out to the outside of the housing case through the opening in the housing case, allowing the terminal of the battery modules to be efficiently cooled. This is advantageous in terms of cooling the interior of the battery.

In the present invention, preferably, the plurality of battery modules are coupled to each other while being lined up adjacent to each other to constitute the stack, and
adjacent stacks are provided in a manner such that terminals of the plurality of battery modules in one stack and terminals of the plurality of battery modules in another stack face each other with the gap.

According to the present invention, when gaps are formed between adjacent stacks, the battery modules of the adjacent stacks face the gaps.

With this, when air is sucked (supplied) by the fan device and flows through the gaps between the adjacent stacks, the battery modules of the adjacent stacks are efficiently cooled with less imbalance, which is advantageous in terms of cooling the interior of the battery.

In the present invention, preferably, the plurality of stacks are lined up in a horizontal direction, and
the ventilation hole is provided at a position facing an upper portion of the gap.

According to the present invention, since the plurality of stacks are lined up in the horizontal direction and the gap between adjacent stacks extend along the up-down direction, hot air in the gap easily rises upward of the gap.

According to the present invention, since the ventilation hole of the fan device is provided at a position facing an upper portion of the gap, the ventilation hole of the fan device is located close to hot air gathering in the upper portion of the gap between adjacent stacks, and air is directly sucked (supplied) by the fan device, which is advantageous in terms of cooling the interior of the battery.

In the present invention, preferably, the electric work vehicle includes a housing cover covering the fan device and an upper portion of the housing case.

According to the present invention, since the housing cover covering the fan device and the upper portion of the housing is provided, the fan device is protected, which is advantageous in terms of preventing damage to the fan device.

In the present invention, preferably, the housing cover includes an opening through which air is passable at a position facing a blowing direction or a sucking direction of the fan device.

According to the present invention, since the opening in the housing cover is provided while facing the blowing direction of the fan device, when air in the gap between adjacent stacks is sucked by the fan device, air blown from the fan device easily flows out from the housing cover through the opening in the housing cover, which is advantageous in terms of cooling the interior of the battery.

According to the present invention, since the opening in the housing cover is provided while facing the sucking direction of the fan device, when air is supplied to the gap between adjacent stacks by the fan device, air outside the housing cover is easily introduced into the housing cover via the opening in the housing cover, which is advantageous in terms of cooling the interior of the battery.

In the present invention, preferably, the fan device is configured to be able to suck air in the housing case, and
in the one stack adjacent to one side of a central stack and another stack adjacent to another side of the central stack,
a blowing direction of the fan device with respect to the gap between the central stack and the one stack, and a blowing direction of the fan device with respect to the gap between the central stack and the other stack are set as opposite directions so that blown air flows away from each other.

A case is assumed in which, for example, three stacks are lined up with a gap, a fan device that corresponds to the gap between the central stack and one stack, and a fan device that corresponds to the gap between the central stack and the other stack are provided, and the fan devices are configured to be able to suck air in the housing case.

According to the present invention, air blown from one fan device and air blown from the other fan device flow in opposite directions so that they move away from each other, and thus air blown from the one fan device and the other fan device hardly gather at one position, which is advantageous in terms of cooling the interior of the battery.

In the present invention, preferably, the electric work vehicle further includes:
a driving section in which an operator rides and performs driving; and
a cover member that is provided in front of the driving section and includes, in a front portion of the cover member, an introduction section through which external air is introduced, the cover member including a top face formed in a forward-descending shape in which the top face descends toward a front side,
wherein the battery is housed in the cover member, and
a housing cover that covers the fan device and a top of the housing case is provided, and
the housing cover includes a top face formed in a forward-descending shape in which the top face descends toward a front side, and the top face of the housing cover and the top face of the cover member are arranged at a predetermined distance in an up-down direction.

In some electric work vehicles, a cover member is in front of the driving section in which an operator rides and performs driving, and the battery is housed in the cover member.

In this case, an introduction section through which external air is introduced is provided in a front portion of the cover member, and as the electric work vehicle moves forward, air outside the cover member may be introduced into the cover member from the introduction section of the cover member and may be supplied to the outside of the battery.

A configuration is also possible in which the top face of the cover member is formed in a forward-descending shape in which it descends toward the front side, and a field of front vision from the driving section is ensured.

According to the present invention, since the housing cover covering upper portions of the fan device and the housing is provided, the fan device is protected, which is advantageous in terms of preventing damage to the fan device.

According to the present invention, since the top face of the housing cover is formed in a forward-descending shape in which it descends toward a front side, and the top face of the housing cover and the top face of the cover member are arranged at a predetermined distance in the up-down direction, the cross-sectional area of a space between the top face of the housing cover and the top face of the cover member hardly varies from the front end of the housing cover to the rear end of the housing cover.

According to the present invention, when, as the electric work vehicle moves forward, air outside the cover member is introduced into the cover member from the introduction section of the cover member and enters the space between the top face of the housing cover and the top face of the cover member, the air easily flow to the rear side without accumulating in the space between the top face of the housing cover and the top face of the cover member.

This promotes exchange of air inside the cover member (in the surroundings of the battery) and suppresses an increase in temperature of the interior of the cover member (in the surroundings of the battery), which is advantageous in terms of cooling the interior of the battery.

### Solution 3

Solutions for "Problem 3" are as follows.

The present invention is directed to an electric work vehicle comprising: a battery; a motor configured to be driven by power from the battery; and a travel device configured to be driven by the motor,
wherein the battery includes: a stack in which a plurality of battery modules are coupled to each other; and a housing case in which a plurality of the stacks lined up adjacent to each other are housed,
the housing case includes: a plurality of lower support members coupled to lower portions of the battery modules; and a first lower frame disposed along a space between adjacent lower support members,
each of the lower support members includes a plurality of coupling parts protruding outward, the plurality of coupling parts being lined up at a predetermined distance, and
adjacent lower support members are arranged in a manner such that the coupling parts of one lower support member enter respective spaces between the coupling parts of the other lower support member, and the coupling parts of the other lower support member enter respective spaces between the coupling parts of the one lower support member, and the coupling parts of the one lower support member and the other lower support member are coupled to the first lower frame.

According to the present invention, the plurality of lower support members are provided in the housing case of the battery, lower portions of the battery modules are coupled to the lower support members, and lower portions of the stacks are supported by the lower support members. Each of the lower support members includes a plurality of coupling parts that protrude outward and are lined up at a predetermined distance, and the first lower frame disposed along a space between adjacent lower support members.

According to the present invention, adjacent lower support members are arranged in a manner such that the coupling parts of one lower support member enter the respective spaces between the coupling parts of the other lower support member, and the coupling parts of the other lower support member enter the respective spaces between the coupling parts of the one lower support member. The coupling parts of the one lower support member and the other lower support member are coupled to the first lower frame.

Due to a configuration in which the coupling parts of the one lower support member and the coupling parts of the other lower support member respectively entering the spaces formed by the coupling parts of the counterpart lower support member, the coupling parts of the one lower support member and the other lower support member are reasonably coupled to the first lower frame even when multiple coupling parts are included in the one and the other lower support members.

As a result of the multiple coupling parts of the lower support members being coupled to the first lower frame, the stacks (battery modules) are firmly coupled to the first lower frame via the lower support members, thereby suppressing the vibration of the stacks (battery modules) against the housing case, which is advantageous in terms of preventing damage to the stacks (battery modules).

In the present invention, preferably, the coupling parts of the lower support members are tapered with a width thereof decreasing away from the corresponding lower support member when viewed in a plan view.

According to the present invention, due to the tapered coupling parts of the lower support members when viewed in a plan view, it is possible to set the distance between a coupling part of one lower support member and a coupling part of another lower support member in a longitudinal direction of the first lower frame to a small distance, compared to a case where the coupling parts of the lower support members are quadrangle-shaped when viewed in a plan view, making it possible to provide a large number of coupling parts in the lower support member.

In contrast to the thin ends of the coupling parts of the lower support members, the base parts of the coupling parts of the lower support members have a large width, and thus the coupling parts of the lower support members have sufficient strength.

As a result, the one lower support member and the other lower support member can have a large number of coupling parts having sufficient strength and the stacks (battery modules) are firmly coupled to the first lower frame via the lower support members, which is advantageous in terms of suppressing the vibration of the stacks (battery modules) against the housing case and preventing damage to the stacks (battery modules).

In the present invention, preferably, the housing case includes a second lower frame disposed parallel to the first lower frame when viewed in a plan view, and
the second lower frame supports connections of the lower support member to the battery modules from below.

According to the present invention, in the housing case of the battery, the second lower frame is disposed parallel to the first lower frame and the connections of the lower support members to the battery modules are supported by the second lower frame from below. That is, the portions of the lower support members apart from the coupling parts are supported by the second lower frame, and thus the weight of the stacks (battery modules) is supported by the first lower frame and the second lower frame via the lower support members.

This is advantageous in terms of suppressing the vibration of the stacks (battery modules) against the housing case and preventing damage to the stacks (battery modules), since the coupling parts of the lower support members are coupled to the first lower frame, the portions of the lower support members away from the coupling parts are supported by the second lower frame, and the weights of the stacks (battery modules) are supported by the first lower frame and the second lower frame.

In the present invention, preferably, the housing case includes a third lower frame disposed orthogonal to the first lower frame and the second lower frame when viewed in a plan view, and
the third lower frame is coupled to the first lower frame and the second lower frame.

According to the present invention, in the housing case of the battery, the third lower frame is disposed orthogonal to the first lower frame and the second lower frame when viewed in a plan view, and the third lower frame is coupled to the first lower frame and the second lower frame.

This is advantageous in terms of suppressing the vibration of the stacks (battery modules) against the housing case and preventing damage to the stacks (battery modules), since the first lower frame and the second lower frame have improved rigidity relative to that of the third lower frame, and the weights of the stacks (battery modules) are supported by the first lower frame, the second lower frame, and the third lower frame.

In the present invention, preferably, the housing case includes: a plurality of upper support members coupled to upper portions of the battery modules; and an upper frame disposed along a space between adjacent upper support members,
each of the upper support members includes a plurality of coupling parts protruding outward, the plurality of coupling parts being lined up at a predetermined distance,
adjacent upper support members are arranged in a manner such that the coupling parts of one upper support member enter respective spaces between the coupling parts of the other upper support member, and the coupling parts of the other upper support member enter respective spaces between the coupling parts of the one upper support member, and the coupling parts of the one upper support member and the other upper support member are coupled to the upper frame.

According to the present invention, in the housing case of the battery, the plurality of upper support members are provided, upper portions of the battery modules are coupled to the upper support members, and upper portions of the stacks are supported by the upper support members.

Each of the upper support members has a plurality of coupling parts that protrude outward and are lined up at a predetermined distance, and the upper frame is disposed along a space between adjacent upper support members.

Adjacent upper support members are arranged in a manner such that the coupling parts of one upper support member enter the respective spaces between the coupling parts of the other upper support member, and the coupling parts of the other upper support member enter the respective spaces between the coupling parts of the one upper support member. The coupling parts of the one upper support member and the other upper support member are coupled to the upper frame.

Due to a configuration in which the coupling parts of the one upper support member and the other upper support member respectively entering the spaces formed by the coupling parts of the counterpart upper support member, the coupling parts of the one upper support member and the other upper support member are reasonably coupled to the upper frame even when multiple coupling parts are included in the one upper support member and the other upper support member. As a result of the multiple coupling parts of the upper support members are coupled to the upper frame, the stacks (battery modules) are firmly coupled to the upper frame via the upper support members.

According to the present invention, in addition to the lower portions of the stacks (battery modules) being supported by the first lower frame via the lower support members, the upper portions of the stacks (battery modules) are supported by the upper frame via the upper support members, and due to multiple coupling parts of the upper support members being coupled to the upper frame, the stacks (battery modules) are firmly coupled to the upper frame via the upper support members, which is advantageous in terms of suppressing the vibration of the stacks (battery modules) against the upper frame via the upper support members and preventing damage to the stacks (battery modules).

In the present invention, preferably, the coupling parts of the upper support members are tapered with a width thereof decreasing away from the corresponding upper support member when viewed in a plan view.

According to the present invention, due to the tapered coupling parts of the upper support members when viewed in a plan view, it is possible to set the distance between the coupling part of one upper support member and the coupling part of the other upper support member in a longitudinal direction of the upper frame to a small distance, compared to a case where the coupling parts of the upper support members are quadrangle-shaped when viewed in a plan view, making it possible to provide a large number of coupling parts in the upper support member.

In contrast to the thin ends of the coupling parts of the upper support members, the base parts of the coupling parts of the upper support members have a large width, and thus the coupling parts of the upper support members have sufficient strength.

As a result, the one upper support member and the other upper support member can have a large number of coupling parts having sufficient strength and the stacks (battery modules) are firmly coupled to the upper frame via the upper support members, which is advantageous in terms of suppressing the vibration of the stacks (battery modules) against the housing case and preventing damage to the stacks (battery modules).

### Brief Description of the Drawings

FIG. 1 is a left side view of a tractor.
FIG. 2 is a left side view showing a layout of an inverter and the like.
FIG. 3 is a diagram showing a flow of motive power transmission.
FIG. 4 is a left side view of the vicinity of a cover member.
FIG. 5 is a longitudinal left side view of the vicinity of the cover member.
FIG. 6 is a horizontal plan view of the vicinity of the cover member.
FIG. 7 is a left side view of a housing case.
FIG. 8 is a plan view of the housing case.
FIG. 9 is a left side view of a battery.
FIG. 10 is a plan view of the battery.
FIG. 11 is a left side view of stacks, a lower support member, and an upper support member.
FIG. 12 is a front view of the stacks, the lower support member, and the upper support member.
FIG. 13 is a bottom view of the stacks, the lower support member, and the upper support member.
FIG. 14 is a longitudinal plan view of the vicinity of the lower support member in the housing case.
FIG. 15 is a plan view of the stacks, the lower support member, and the upper support member.
FIG. 16 is a plan view of the vicinity of the upper support member in the housing case.
FIG. 17 is a left side view of the housing case and the stacks, as well as the vicinity of a fan device.
FIG. 18 is a plan view of the vicinity of a substrate member and the fan device in the housing case.

### Best Mode for Carrying out the Invention

An embodiment of the present invention will be described based on the drawings. In the following description, unless otherwise stated, the direction of an arrow F and the direction of an arrow B in the drawings will be respectively referred to as "the front side" and "the rear side", and the direction of an arrow L and the direction of an arrow R in the drawings will be respectively referred to as "the left side" and "the right side". Also, the direction of an arrow U and the direction of an arrow D in the drawings will be respectively referred to as "the upper side" and "the lower side".

### Overall Configuration of Tractor

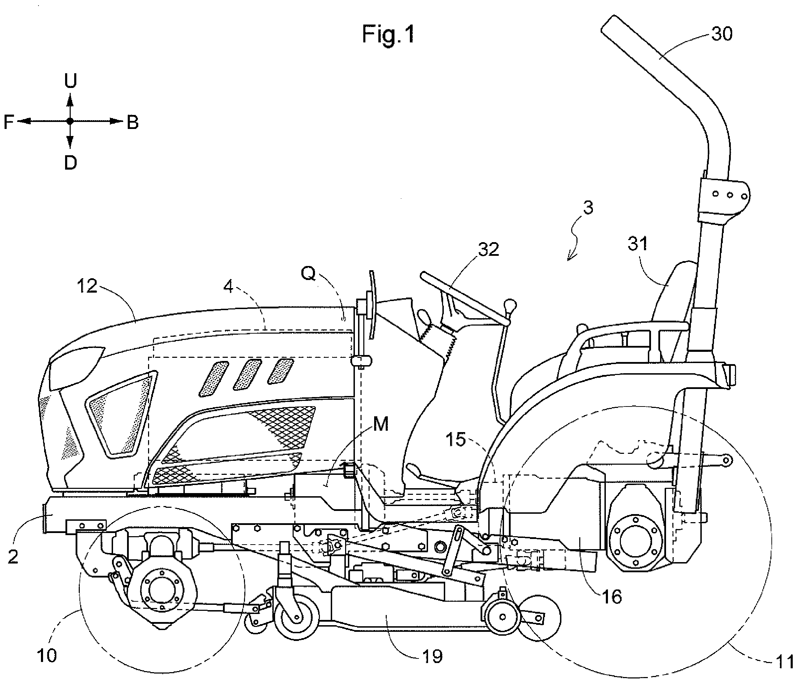

The following describes a tractor according to the present embodiment. As shown in FIG. 1, the tractor includes left and right front wheels 10, left and right rear wheels 11, and a cover member 12.

The tractor also includes body frames 2 and a driving section 3. The body frames 2 are supported by the left and right front wheels 10 and the left and right rear wheels 11.

The cover member 12 is disposed in a front portion of the body of the tractor. The driving section 3 is behind the cover member 12. In other words, the cover member 12 is in front of the driving section 3.

The driving section 3 includes a protective frame 30, a driver's seat 31, and a steering wheel 32. An operator can sit on the driver's seat 31. Accordingly, the operator can ride in the driving section 3. The operator steers the left and right front wheels 10 by operating the steering wheel 32. The operator can perform various driving operations in the driving section 3.

The tractor includes a battery 4 for driving. The cover member 12 is configured to be pivotable about an opening/closing axis Q extending in the left-right direction of the body. Accordingly, the cover member 12 is configured to be openable and closable. When the cover member 12 is closed, the battery 4 for driving is covered by the cover member 12.

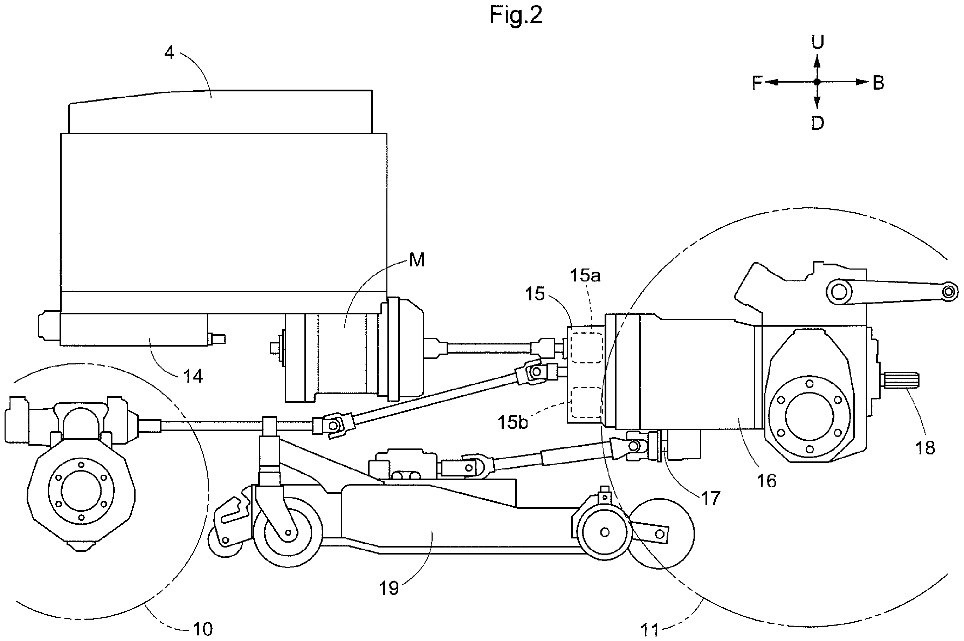

As shown in FIG. 2, the tractor includes an inverter 14 and a motor M. The battery 4 for driving supplies power to the inverter 14. The inverter 14 converts DC power supplied from the battery 4 for driving to AC power, and supplies the AC power to the motor M. The motor M is driven by the AC power supplied from the inverter 14.

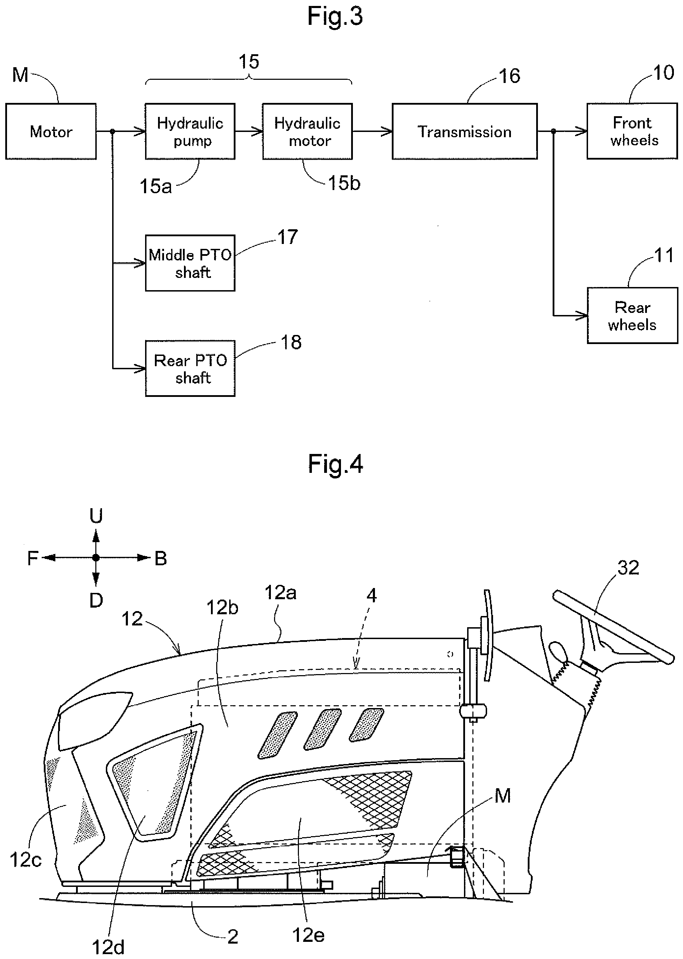

As shown in FIGS. 2 and 3, the tractor includes a hydraulic continuously variable transmission 15 and a transmission 16. As shown in FIG. 3, the hydraulic continuously variable transmission 15 includes a hydraulic pump 15a and a hydraulic motor 15b.

The hydraulic pump 15a is driven by rotational motive power transmitted from the motor M. As a result of the hydraulic pump 15a being driven, rotational motive power is output from the hydraulic motor 15b. The hydraulic continuously variable transmission 15 is configured to change the speed of rotational motive power between the hydraulic pump 15a and the hydraulic motor 15b. Also, the hydraulic continuously variable transmission 15 is configured to be capable of changing the transmission ratio in a stepless manner.

The rotational motive power output from the hydraulic motor 15b is transmitted to the transmission 16. The speed of the rotational motive power transmitted to the transmission 16 is changed by a gear transmission mechanism included in the transmission 16, and the rotational motive power is distributed to the left and right front wheels 10 and the left and right rear wheels 11. Thus, the left and right front wheels 10 and the left and right rear wheels 11 are driven.

As shown in FIGS. 2 and 3, the tractor also includes a middle PTO shaft 17 and a rear PTO shaft 18. Rotational motive power output from the motor M is distributed to the hydraulic pump 15a, the middle PTO shaft 17, and the rear PTO shaft 18. The middle PTO shaft 17 and the rear PTO shaft 18 are rotated by the distributed rotational motive power.

If a work device is connected to the middle PTO shaft 17 or the rear PTO shaft 18, the work device is driven by rotational motive power transmitted by the middle PTO shaft 17 or the rear PTO shaft 18. For example, in the present embodiment, a grass cutting device 19 is connected to the middle PTO shaft 17 as shown in FIG. 2. The grass cutting device 19 is driven by rotational motive power transmitted by the middle PTO shaft 17.

### Configuration of Cover Member

As shown in FIG. 1, the right and left body frames 2 and the transmission 16 are coupled to each other, and thus the body, serving as a framework of the tractor, is configured by the right and left portions of the body frame 2 and the transmission 16.

As shown in FIGS. 4, 5, and 6, the battery 4 for driving (hereinafter, referred to as "battery 4") is installed in a front portion of the body, and the battery 4 is housed in the closed cover member 12. A top face 12a of the cover member 12 is formed in a forward-descending shape in which it descends toward the front side when viewed in a side view, and side faces 12b of the cover member 12 extend along a front-rear direction when viewed in a plan view.

A front grille 12c, which is grid-shaped with high ventilation performance and serves as an introduction section, is provided in the front portion of the cover member 12, and side grilles 12d and 12e, which are grid-shaped with high ventilation performance, are provided at the right and left side faces 12b of the cover member 12. As the body moves forward, air is introduced into the cover member 12 mainly through the front grille 12c of the cover member 12.

### Overall Configuration of Battery

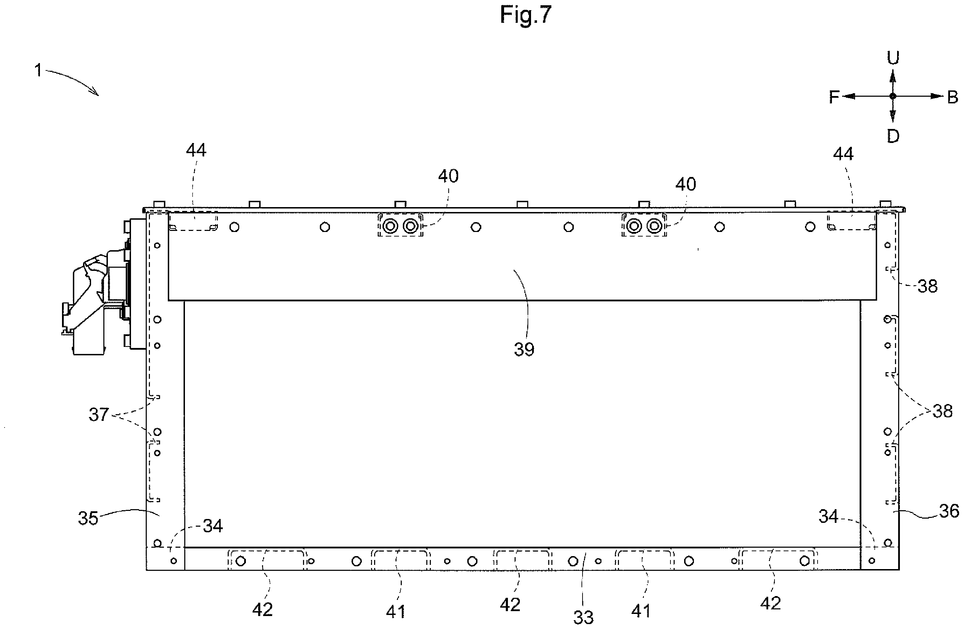

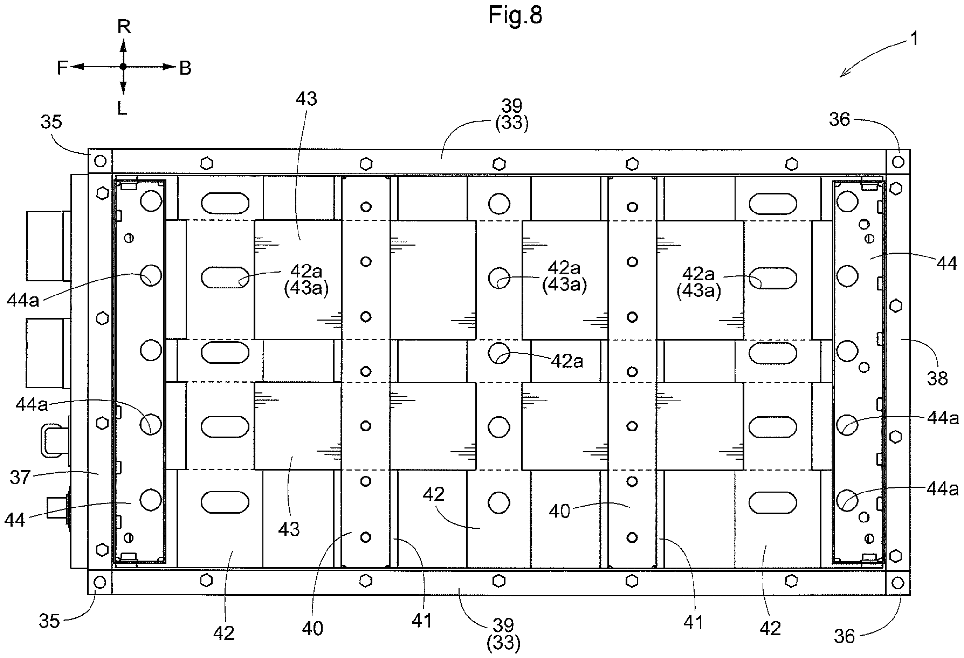

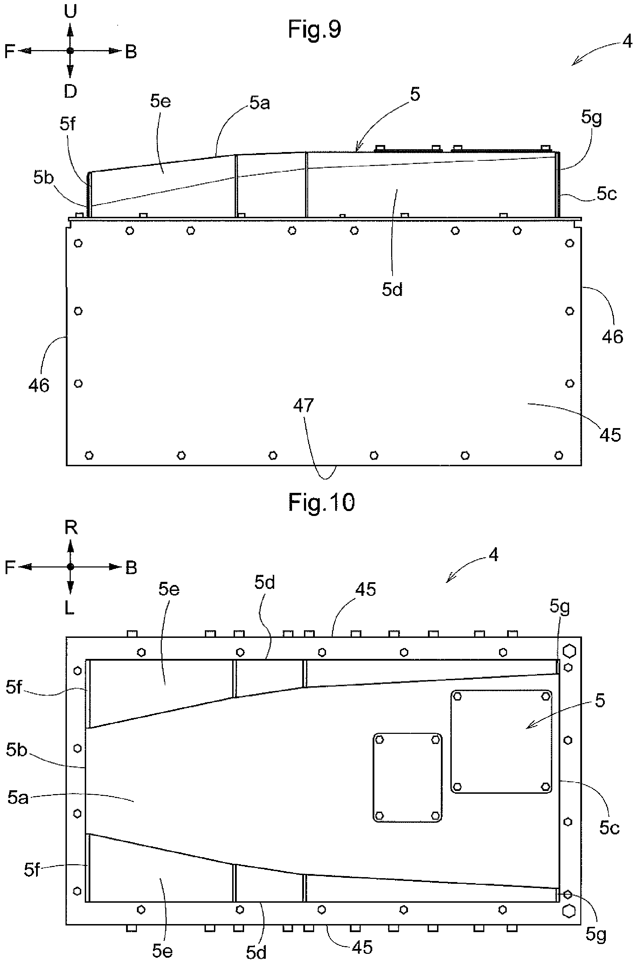

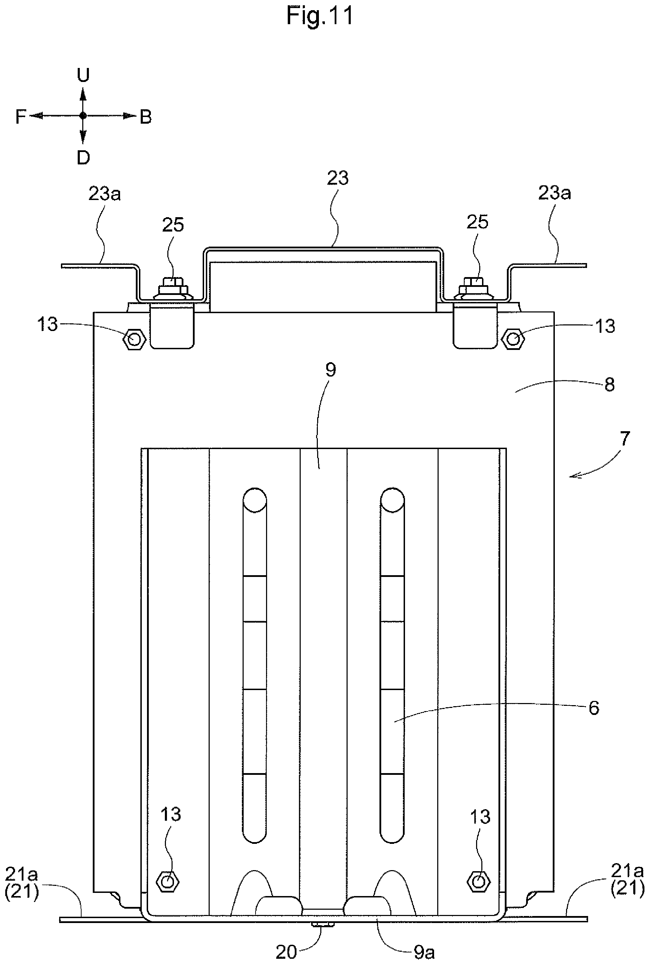

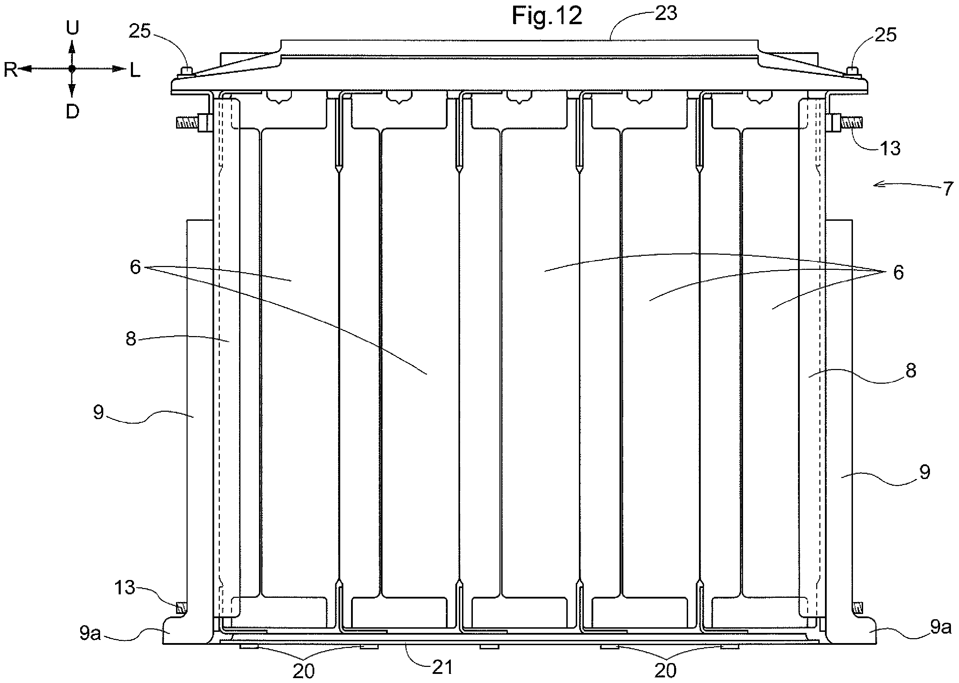

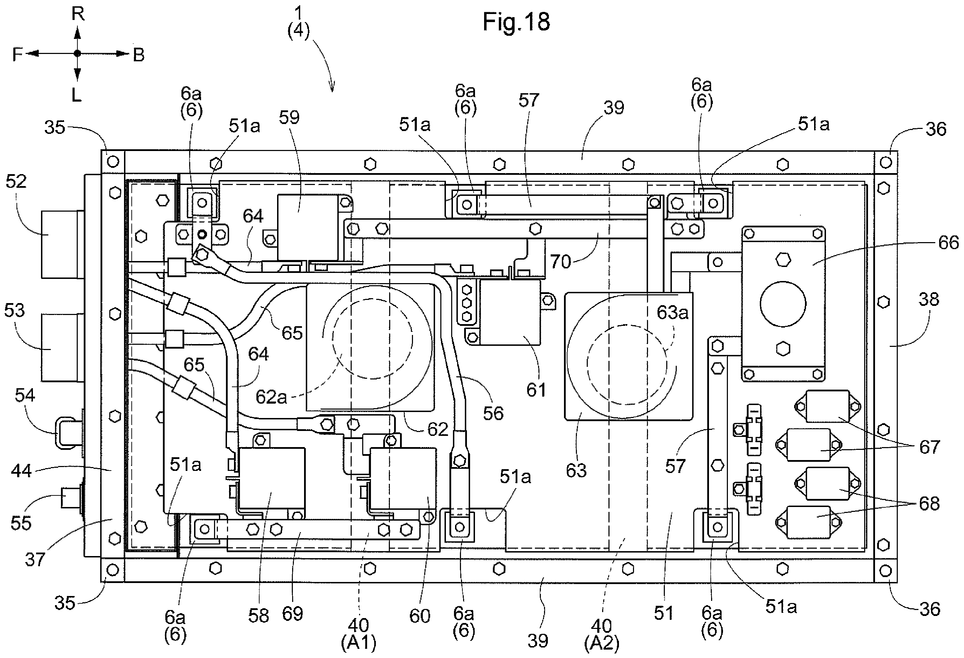

The battery 4 is provided with battery modules 6, a stack 7 (see FIGS. 11 and 12) in which a plurality of battery modules 6 (see FIGS. 11 and 12) are connected to each other, a housing case 1 (see FIGS. 7 and 8) in which a plurality of stacks 7 are housed, various devices (see FIG. 18) provided in an upper portion of the housing case 1, a housing cover 5 (see FIGS. 9 and 10) covering the top of the housing case 1 and the devices.

### Configuration of Housing Case of Battery

As shown in FIGS. 7 to 10, the housing case 1 is provided with horizontal frames 33, 34, 37, 38, and 39, vertical frames 35 and 36, upper frames 40 and 44, first lower frames 41, second lower frames 42, third lower frames 43, side plates 45 and 46, a bottom plate 47, and the like to form a rectangular (quadrangle-shaped) box shape when viewed in a plan view.

As shown in FIGS. 7 and 8, the right and left horizontal frames 33 located at the bottom of the housing case 1, and the front and rear horizontal frames 34 are coupled in a rectangular shape, and the front vertical frames 35 and rear vertical frames 36 are coupled to the ends of the horizontal frames 33 and 34. The front horizontal frame 37 is coupled to the vertical frames 35 while spanning the space therebetween, and the rear horizontal frame 38 is coupled to the vertical frames 36 while spanning the space therebetween. The right and left horizontal frames 39 are coupled to upper portions of the vertical frames 35 and 36 while spanning the spaces therebetween.

Two first lower frames 41 are coupled to the horizontal frames 33 while spanning the space therebetween along a left-right direction. Three second lower frames 42 are disposed parallel to the first lower frames 41 when viewed in a plan view and are coupled to the horizontal frames 33 while spanning the space therebetween along the left-right direction. Large openings 42a are formed in the second lower frames 42.

Two third lower frames 43 are disposed orthogonal to the first lower frames 41 and the second lower frames 42 when viewed in a plan view and are coupled to the horizontal frames 34 while spanning the space therebetween along the front-rear direction and are coupled to the first lower frames 41 and the second lower frames 42. At each position at which a second lower frame 42 and a third lower frame 43 are coupled to each other, an opening 43a as large as the openings 42a in the second lower frames 42 is formed in the third lower frame 43.

Two upper frames 40 are coupled to the horizontal frames 39 while spanning the space therebetween along the left-right direction. Two upper frames 44 are coupled to the horizontal frames 37, 38, and 39 along the left-right direction. Large openings 44a are formed in the upper frames 44.

As shown in FIGS. 9 and 10, the right and left side plates 45 in a flat plate shape are coupled to the horizontal frames 33 and 39 and the vertical frames 35 and 36. The front and rear side plates 46 in a flat plate shape are coupled to the horizontal frames 34, 37, and 38, and the vertical frames 35 and 36. The bottom plate 47 in a flat plate shape is coupled to the horizontal frames 33 and 34.

### Configuration of Stacks in Battery

As shown in FIGS. 11 and 12, five battery modules 6 are stacked and five battery modules 6 are coupled to each other while being lined up adjacent to each other, thereby forming one stack 7. Three stacks 7 are provided in the battery 4.

A flat plate-shaped coupling member 8 and a coupling member 9 with a mounting portion 9a are provided, and the coupling member 8 and the coupling member 9 are coupled to each other. The coupling members 8 and 9 are attached to one side and another side of the stack 7 (battery modules 6), and four bolts 13 are passed through the coupling members 8 and 9 on one side, the battery modules 6, and the coupling members 8 and 9 on the other side to tighten them.

With this, the five battery modules 6 are coupled to each other while being compressed by the coupling members 8 and 9 and the bolts 13.

### Configuration of Lower Support Member

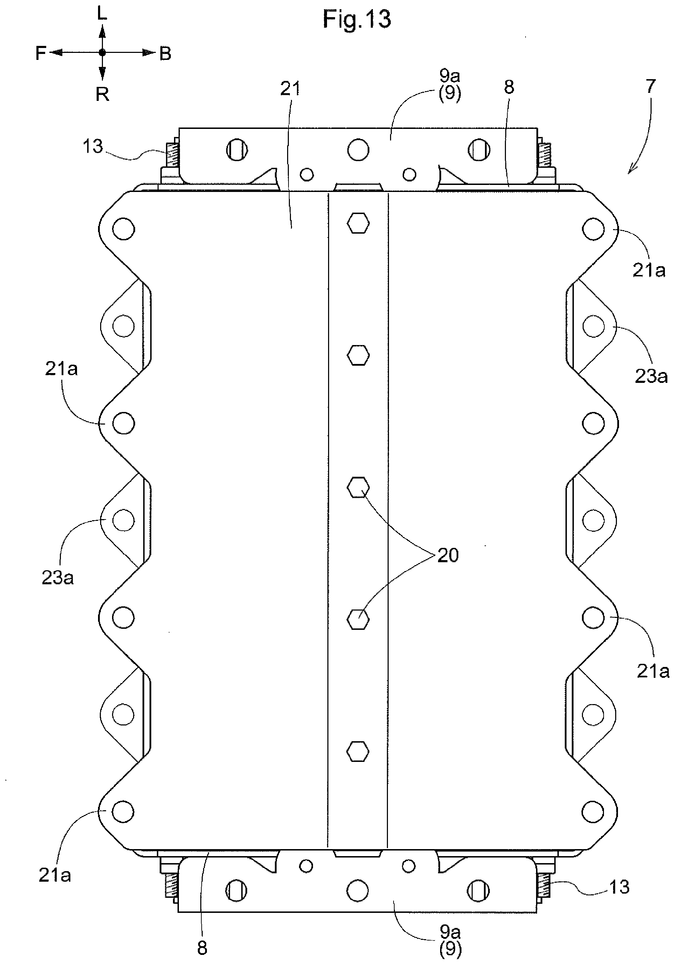

As shown in FIGS. 11 to 14, the lower support members 21 and 22 are provided.

As shown in FIGS. 11, 12, and 13, the lower support member 21 is flat plate shaped, and four coupling parts 21a protruding outward are provided at each of one edge and another edge of the lower support member 21, while being lined up at a predetermined distance. When viewed in a plan view, the coupling parts 21a of the lower support member 21 are triangle-shaped and tapered with their width decreasing away from the lower support member 21.

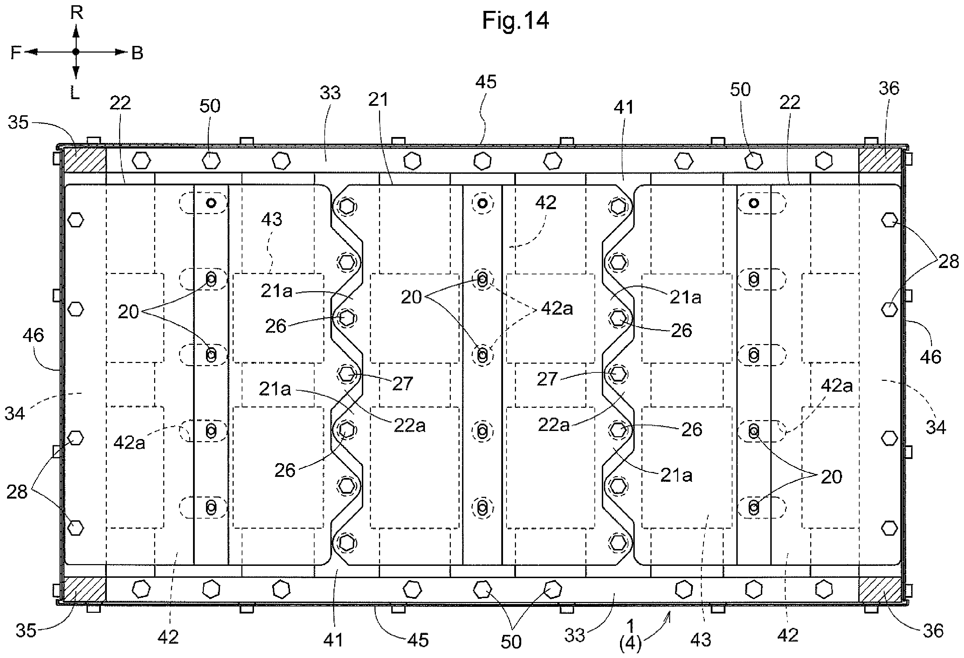

As shown in FIG. 14, the lower support members 22 are flat plate shaped, and three coupling parts 22a protruding outward are provided at one edge of each lower support member 22, while being lined up at a predetermined distance. When viewed in a plan view, the coupling parts 22a of the lower support members 22 are triangle-shaped and tapered with their width decreasing away from the corresponding lower support member 22.

As shown in FIGS. 11, 12, and 13, in one stack 7 of the three stacks 7, the lower support member 21 is coupled to lower central portions of the battery modules 6 by bolts 20.

As shown in FIG. 14, in two stacks 7 of the three stacks 7, the lower support members 22 are coupled to lower central portions of the battery modules 6 by the bolts 20.

### Configuration of Upper Support Member

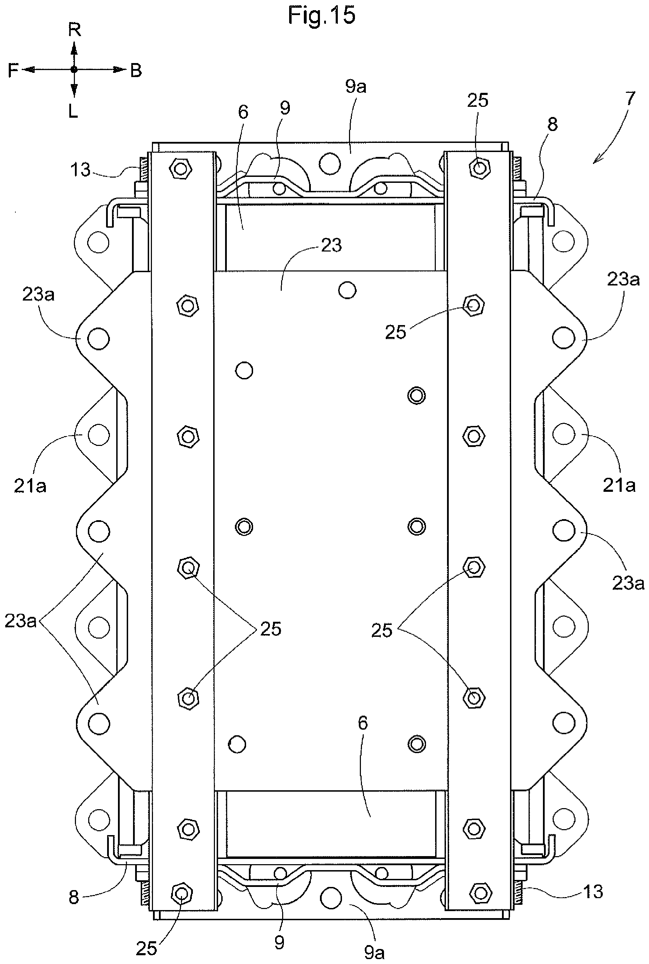

As shown in FIGS. 11, 12, 15, and 16, the upper support members 23 and 24 are provided.

As shown in FIGS. 11, 12, and 15, the upper support member 23 is formed by bending a plate material, and three coupling parts 23a protruding outward are provided at each of one edge and another edge of the upper support member 23, while being lined up at a predetermined distance. When viewed in a plan view, the coupling parts 23a of the upper support member 23 are triangle-shaped and tapered with their width decreasing away from the upper support member 23.

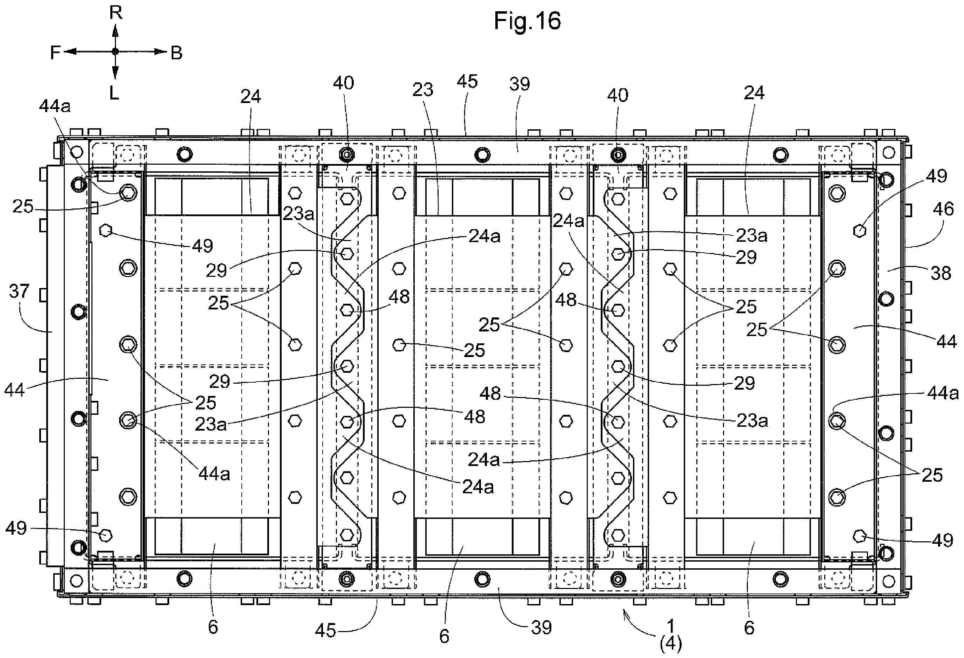

As shown in FIG. 16, the upper support members 24 are formed by bending a plate material, and three coupling parts 24a protruding outward are provided at one edge of each of the upper support members 24, while being lined up at a predetermined distance. When viewed in a plan view, the coupling parts 24a of the upper support members 24 are triangle-shaped and tapered with their width decreasing away from the corresponding upper support member 24.

As shown in FIGS. 11, 12, and 15, in one stack 7 to which the lower support member 21 is coupled, among the three stacks 7, the upper support member 23 is coupled to upper portions of the battery modules 6 by bolts 25, so that the upper support member 23 is coupled to upper portions of the coupling members 8 by the bolts 25.

As shown in FIG. 16, in each of two stacks 7 to which the lower support member 22 is coupled, among the three stacks 7, the corresponding upper support member 24 is coupled to upper portions of the battery modules 6 by the bolts 25, so that the upper support member 24 is coupled to upper portions of the coupling members 8 by the bolts 25.

As described above, the stacks 7 (battery modules 6) are combined with the coupling members 8 and 9, the lower support members 21 and 22, and the upper support members 23 and 24 into one piece to serve as one unit.

### Attached State of Lower Support Member to Stacks in Housing Case

As shown in FIG. 14, in a state in which the upper frames 44 (see FIG. 16) of the housing case 1 are removed, the stack 7 to which the lower support member 21 and the upper support member 23 are coupled is installed in a central portion of the housing case 1. The stacks 7 to which the lower support members 22 and the upper support members 24 are coupled are respectively placed in a front portion and a rear portion of the housing case 1.

In the stack 7 to which the lower support member 21 and the upper support member 23 are coupled, the coupling parts 21a of the lower support member 21 are placed on the first lower frame 41 and are coupled to the first lower frame 41 by bolts 26. The central portion of the lower support member 21 is placed on the second lower frame 42, and the bolts 20 are positioned in the openings 42a and 43a in the second lower frame 42 and the third lower frame 43.

In the stacks 7 to which the lower support members 22 and the upper support members 24 are coupled, the coupling parts 22a of the lower support member 22 are placed on the first lower frames 41 and are coupled to the first lower frames 41 by bolts 27. Another edge of each lower support member 22 is placed on the corresponding horizontal frame 34 and are coupled to the horizontal frame 34 by bolts 28. The central portions of the lower support members 22 are placed on the respective second lower frames 42 and the bolts 20 are positioned in the openings 42a and 43a in the second lower frame 42 and the third lower frame 43.

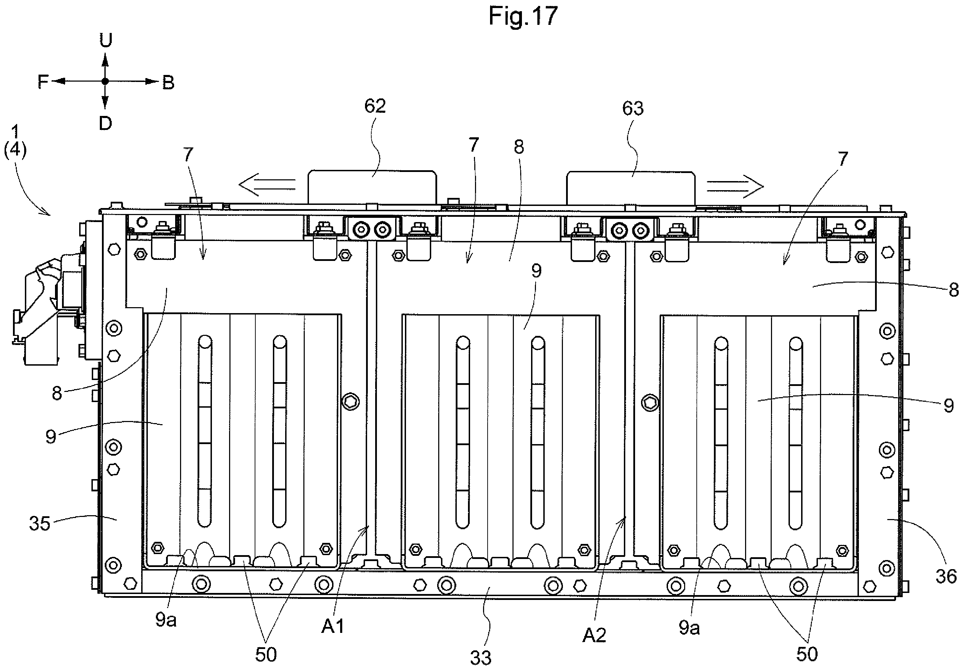

In the stack 7 to which the lower support member 21 and the upper support member 23 are coupled, and the stacks 7 to which the lower support member 22 and the upper support member 24 are coupled, as shown in FIG. 17, the mounting portions 9a of the coupling members 9 are coupled to the horizontal frames 33 by bolts 50.

With the above-described configuration, in the battery 4, the stacks 7 in which a plurality of battery modules 6 are coupled to each other are lined up adjacent to each other and are housed in the housing case 1. The plurality of lower support members 21 and 22 coupled to the lower portions of the battery modules 6, and the first lower frames 41 disposed along the spaces between the adjacent lower support members 21 and 22 are provided in the housing case 1.

In the adjacent lower support members 21 and 22, the coupling parts 21a of one lower support member 21 enter the respective spaces between the coupling parts 22a of the other lower support member 22, and the coupling parts 22a of the other lower support member 22 enter the respective spaces between the coupling parts 21a of the one lower support member 21. The coupling parts 21a and 22a of the one lower support member 21 and the other lower support member 22 are coupled to the first lower frame 41.

The coupling parts 21a of the lower support member 21 are supported by the first lower frame 41 and the third lower frame 43 from below, and connections (near the bolts 20) of the lower support member 21 to the battery modules 6 are supported by the second lower frame 42 and the third lower frame 43 from below.

The central stack 7 (battery modules 6) is considered to more easily vibrate than the front and rear stacks 7 (battery module 6). On each of the first lower frames 41, the number (four) of coupling parts 21a of the lower support member 21 is set to be larger than the number (three) of coupling parts 22a of the lower support member 22, so that the central stack 7 (battery module 6) is firmly coupled to the first lower frames 41.

### Attached State of Upper Support Member to Stacks in Housing Case

As described above, when the stack 7 to which the lower support member 21 and the upper support member 23 are coupled is installed in a central portion of the housing case 1, as shown in FIG. 16, the coupling parts 23a of the upper support member 23 are placed on the upper frames 40 and are coupled to the upper frames 40 by bolts 29.

As described above, when the stacks 7 to which the lower support member 22 and the upper support member 24 are coupled are respectively installed in a front portion and a rear portion of the housing case 1, the coupling parts 24a of the upper support members 24 are placed on the upper frames 40 and are coupled to the upper frames 40 by bolts 48.

The upper frame 44 is placed on another edge of each upper support member 24 from above, and the bolts 25 of the upper support members 24 are inserted into the respective openings 4a in the upper frame 44. The upper frames 44 are bolted to the horizontal frames 37 and 39, and the upper frames 44 and the upper support members 24 are coupled to each other by bolts 49.

With the above-described configuration, in the battery 4, the plurality of upper support members 23 and 24 coupled to the upper portions of the battery modules 6 and the upper frames 40 disposed along the space between adjacent upper support members 23 and 24 are provided in the housing case 1.

In the adjacent upper support members 23 and 24, the coupling parts 23a of one upper support member 23 enter the respective spaces between the coupling parts 24a of the other upper support member 24, and the coupling parts 24a of the other upper support member 24 enter the respective spaces between the coupling parts 23a of the one upper support member 23. The coupling parts 23a and 24a of the one upper support member 23 and the other upper support member 24 are coupled to the upper frames 40.

As described above, three stacks 7 (battery modules 6) are housed in the housing case 1 via the lower support members 21 and 22, the upper support members 23 and 24, and the coupling members 8 and 9, are coupled to the housing case 1, and are lined up in the front-rear direction (horizontal direction).

### Configuration Relating to Connection Part of Upper Portion of Housing Case

As shown in FIG. 18, a substrate member 51 in a rectangular shape (quadrangle shape) when viewed in a plan view is coupled to the upper support members 23 and 24 (see FIG. 16), and the top of the housing case 1 is covered by the substrate member 51. Connection parts 52, 53, 54, and 55 are provided on the front horizontal frame 37.

The connection part 52 is for charging the battery modules 6 with power supplied from an external power source (not shown). The connection part 53 is for supplying power from the battery modules 6 to the inverter 14 (see FIG. 2). The connection part 54 is for supplying power from the battery modules 6 to a DC-DC converter (not shown), and power stepped down to 12 V by the DC-DC converter is supplied to another battery (not shown). The connection part 55 is for being supplied with power from the above-described other battery.

In three stacks 7, five battery modules 6 are connected in series to each other. Openings 51a are formed in the substrate member 51 (housing case 1) at positions above the terminals 6a of the battery modules 6 at the right and left ends of the stacks 7.

A harness 56 is connected between the terminal 6a (minus) of the battery module 6 at the right end of the front stack 7 and the terminal 6a (plus) of the battery module 6 at the left end of the central stack 7. A flat plate-shaped connection member 57 is connected between the terminal 6a (minus) of the battery module 6 at the right end of the central stack of 7 and the terminal 6a (plus) of the battery module 6 at the left end of the rear stack 7.

Relay switches 58, 59, 60, and 61 are provided on the substrate member 51. A flat plate-shaped connection member 69 is connected between the terminal 6a (plus) of the battery module 6 at the left end of the front stack 7 and the relay switches 58 and 60. A flat plate-shaped connection member 70 is connected between the terminal 6a (minus) of the battery module 6 at the right end of the rear stack 7 and the relay switches 59 and 61.

Harnesses 64 are connected between the relay switches 58 and 59, and the connection part 52, and the relay switches 58 and 59 function when the battery modules 6 are charged with power supplied from the external power source.

Harnesses 65 are connected between the relay switches 60 and 61, and the connection part 53, and the relay switches 60 and 61 function when power is supplied from the battery modules 6 to the inverter 14.

A shut-off part 66 is provided in a mid-way portion of the connection member 57. When performing a maintenance operation for the battery 4, an operator brings the shut-off part 66 into a shut-off state.

### Configuration Relating to Pre-charge Part and Discharge Part in Upper Portion of Housing Case

As shown in FIG. 18, pre-charge parts 67 and discharge parts 68 are provided in the left corner at the rear end of the substrate member 51. With this, the pre-charge parts 67 and the discharge parts 68 are provided in an upper portion of the housing case 1, are provided at the upper rear end of the housing case 1, and are provided in the left corner at the upper rear end of the housing case 1.

When power supply is started from the battery modules 6 (battery 4) to the inverter 14 by a key-on operation, the pre-charge parts 67 perform processing for gradually supplying power to the inverter 14 for about several seconds.

When power supply from the battery modules 6 (battery 4) to the inverter 14 is shut off by a key-off operation, the discharge parts 68 perform processing for discharging power remaining in the inverter 14 (capacitor) for about several seconds.

### Configuration Relating to Fan Device in Upper Portion of Housing Case

As shown in FIGS. 17 and 18, when three stacks 7 (battery modules 6) are housed in the housing case 1, the three stacks 7 are lined up adjacent to each other at predetermined gaps A1 and A2. The gaps A1 and A2 extend over the entire width of the stack 7 and over the entire height of the stack 7 and are positioned below the respective upper frames 40.

In the front stack 7 and the central stack 7 adjacent to each other, the front and central stacks 7 are provided so that the respective rear ends of the five battery modules 6 in the front stack 7 and the respective front ends of the five battery modules 6 in the central stack 7 face each other with a gap A1.

In the rear stack 7 and the central stack 7 adjacent to each other, the rear and central stacks 7 are provided so that the respective front ends of the five battery modules 6 in the rear stack 7 and the respective rear ends of the five battery modules 6 in the central stack 7 face each other with a gap A2.

Two fan devices 62 and 63 are provided on the substrate member 51. The fan devices 62 and 63 are configured in a sirocco fan type, and circular ventilation holes 62a and 63a are provided in respective lower portions of the fan devices 62 and 63.

The fan device 62 sucks air from the ventilation hole 62a of the fan device 62 and blows out the sucked air toward the front side. The fan device 63 sucks air from the ventilation hole 63a of the fan device 63 and blows out the sucked air toward the rear side.

The ventilation holes 62a and 63a of the fan devices 62 and 63 are respectively provided at positions facing the upper portions of the gaps A1 and A2 when viewed in a side view, and are respectively provided in the centers of the gaps A1 and A2 in the left-right direction when viewed in the plan view.

The ventilation holes 62a and 63a of the fan devices 62 and 63 have diameters set to be larger than the front-rear width of the upper frame 40. The ventilation holes 62a and 63a of the fan devices 62 and 63 protrude forward of the front end of the upper frame 40 and protrude rearward of the rear end of the upper frame 40, when viewed in a plan view.

### Configuration of Housing Cover of Battery

As shown in FIGS. 9 and 10, the housing cover 5 is provided on the top of the housing case 1, and the housing cover 5 covers the top of the housing case 1, the substrate member 51, the relay switches 58 to 61, the fan devices 62 and 63, the shut-off part 66, the pre-charge parts 67, the discharge parts 68, and the like, which are shown in FIG. 18.

The housing cover 5 is formed by bending a plate material and includes a top face 5a, a front face 5b, a rear face 5c, right and left side faces 5d, and right and left inclined faces 5e. The front face 5b, the rear face 5c, and the side faces 5d of the housing cover 5 extend in the vertical direction.

The top face 5a of the housing cover 5 is formed in a forward-descending shape in which it descends toward the front side when viewed in a side view. The inclined faces 5e of the housing cover 5 are connected between the top face 5a and the side faces 5d of the housing cover 5, and are formed in a forward-descending shape in which they descend toward the front side when viewed in a side view and in a laterally-descending shape in which they descend toward the laterally outer side when viewed in a front view.

The side portions of the front face 5b of the housing cover 5 are not adjacent to the front portions of the side faces 5d of the housing cover 5 and the front portions of the inclined faces 5e of the housing cover 5, and right and left openings 5f in a shape of an elongated gap are formed in the housing case 1. Since the fan device 62 shown in FIGS. 17 and 18 blows out sucked air toward the front side, the openings 5f through which air can be passed are provided at the positions of the housing cover 5 facing the blowing direction of the fan device 62.

The side portions of the rear face 5c of the housing cover 5 are not adjacent to the rear portions of the side faces 5d of the housing cover 5 and the rear portions of the inclined faces 5e of the housing cover 5, and right and left openings 5g in a shape of an elongated gap are formed in the housing case 1. Since the fan device 63 shown in FIGS. 17 and 18 blows out sucked air toward the rear side, the openings 5g through which air can be passed are provided at the positions of the housing cover 5 facing the blowing direction of the fan device 63.

### Cooled State of Battery Due to Operation of Fan Device

As shown in FIGS. 17 and 18, the fan devices 62 and 63 are activated with power supplied to the connection part 55 by a key-on operation and are deactivated by a key-off operation.

When the fan device 62 is activated, air in the gap A1 (air inside the housing case 1) is sucked from the ventilation hole 62a of the fan device 62, and the fan device 62 blows out the sucked air toward the front side. Air blown from the fan device 62 easily flows out from the housing cover 5 through the openings 5f (see FIGS. 9 and 10) of the housing cover 5 and easily flows out into the cover member 12.

When the fan device 63 is activated, air in the gap A2 (air inside the housing case 1) is sucked from the ventilation hole 63a of the fan device 63, and the fan device 63 blows out the sucked air toward the rear side. Air blown from the fan device 63 easily flows outside from the housing cover 5 through the openings 5g (see FIGS. 9 and 10) of the housing cover 5 and easily flows out into the cover member 12.

In this case, the blowing direction (forward) of the fan device 62 and the blowing direction (backward) of the fan device 63 are set as opposite directions so that the blown air flows away from each other. The fan device 62 corresponds to the fan device 62 for the gap A1 between the central stack 7 and one stack 7, and the fan device 63 corresponds to the fan device 63 for the gap A2 between the central stack 7 and the other stack 7.

When air blown from the fan devices 62 and 63 has flowed out from the housing cover 5 through the openings 5f and 5g of the housing cover 5, air inside the cover member 12 is introduced into the housing cover 5 through the openings 5f and 5g (see FIGS. 9 and 10) of the housing cover 5.

As described above, when the air inside the housing case 1 is sucked by the fan devices 62 and 63, air inside the housing cover 5 (outside the housing case 1) is introduced into the housing case 1. In this case, the air inside the housing cover 5 (outside the housing case 1) is introduced into the housing case 1 mainly through the openings 51a in the substrate member 51 while passing by the terminals 6a of the battery modules 6.

As described above, when the fan devices 62 and 63 are activated in the battery 4, air is circulated between the inside of the housing case 1 and the inside of the housing cover 5, and thus equalization of the temperatures of the air inside the housing case 1 and the air inside the housing cover 5 is realized, which promotes heat dissipation from the side plates 45 and 46 and the bottom plate 47 of the housing case 1 and heat dissipation from the housing cover 5 to cool the inside of battery 4.

### Relationship Between Cover Member and Housing Cover of Battery

As shown in FIGS. 4, 5, and 6, the top face 12a of the cover member 12 is formed in a forward-descending shape in which it descends toward the front side when viewed in a side view, and as shown in FIGS. 9 and 10, the top face 5a and the inclined faces 5e of the housing cover 5 are formed in a forward-descending shape in which they descend toward the front side when viewed in a side view.

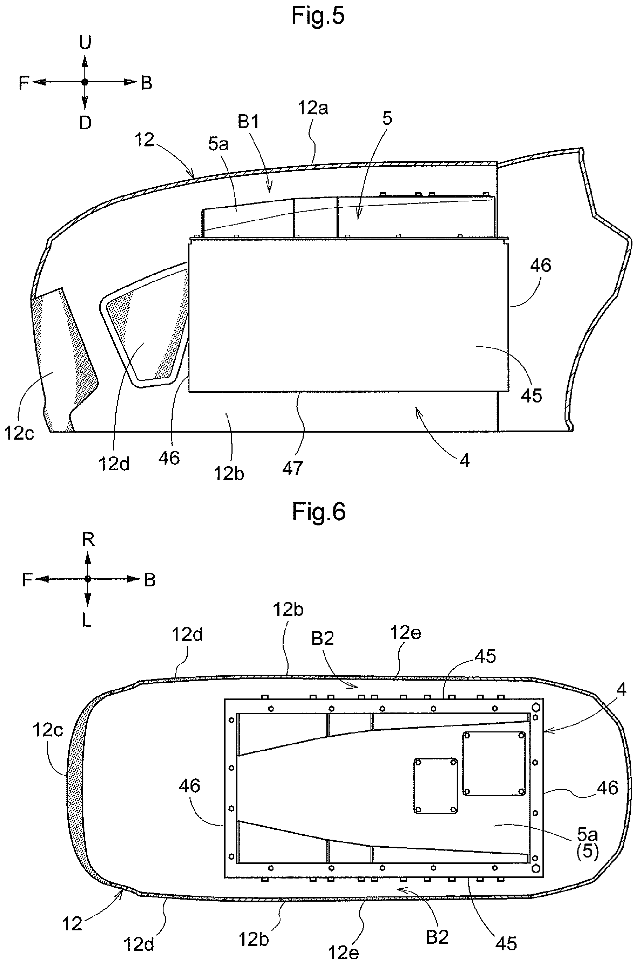

As shown in FIG. 5, the top face 5a and the inclined faces 5e of the housing cover 5 and the top face 12a of the cover member 12 are arranged at a predetermined distance in the up-down direction, and a space B1 is formed between the top face 5a and the inclined faces 5e of the housing cover 5 and the top face 12a of the cover member 12, when viewed in a side view.

As shown in FIG. 6, the battery 4 (side plates 45) and the side faces 12b of the cover member 12 are arranged at a predetermined distance in the left-right direction, and right and left spaces B2 are formed between the battery 4 (side plates 45) and the side faces 12b of the cover member 12, when viewed in a plan view.

As the body moves forward, air is introduced into the cover member 12 mainly through the front grille 12c of the cover member 12. The air introduced into the cover member 12 flows around the battery 4 while passing through the spaces B1 and B2 and flows out from the cover member 12 mainly through the side grilles 12d and 12e of the cover member 12. This promotes heat dissipation from the side plates 45 and 46 and the bottom plate 47 of the housing case 1 and heat dissipation from the housing cover 5 to cool the interior of the battery 4.

### First Modification of Embodiment of Invention

In FIGS. 11 to 14, the lower support members 21 and 22 may be removed from the stacks 7 (battery modules 6) in advance and coupled to the housing case 1.

According to this configuration, it is sufficient to remove the bottom plate 47 (see FIG. 9) from the housing case 1, install the stacks 7 (battery modules 6) on the lower support members 21 and 22, and connect the bolts 20 to the battery modules 6 from the bottom of the first lower frame 41.

### Second Modification of Embodiment of Invention

In FIGS. 11, 12, 15, and 16, the upper support members 23 and 24 may be removed from the stacks 7 (battery modules 6).

According to this configuration, it is sufficient to install the stacks 7 (battery modules 6) in the housing case 1, and then couple the upper support members 23 and 24 to the upper portion of the stacks 7 (battery modules 6) and to the upper frames 40 and 44.

### Third Modification of Embodiment of Invention

The coupling parts 21a and 22a of the lower support members 21 and 22 may be elongated rectangular when viewed in a plan view.

The number of coupling parts 21a and 22a of the lower support members 21 and 22 may be respectively set to two and three, or four and five.

The number of coupling parts 22a of the lower support member 22 may be larger than the number of coupling parts 21a at one edge of the lower support member 21.

The coupling parts 23a and 24a of the upper support members 23 and 24 may be elongated rectangular when viewed in a plan view.

The number of coupling parts 23a and 24a of the upper support members 23 and 24 may be respectively set to three and two, or five and four.

The number of coupling parts 23a at one edge of the upper support member 23 may be larger than the number of coupling parts 24a of the upper support member 24.

### Fourth Modification of Embodiment of Invention

The pre-charge parts 67 and the discharge parts 68 shown in FIG. 18 may be provided, on the upper part (substrate member 51) of the housing case 1, in a central portion, in the left-right direction, at the rear end, in the right corner at the rear end, or in a central portion, in the left-right direction, at the front end, or may be provided in the right or left corner at the front end, in a central portion, in the front-rear direction, at the right side end, in the front or rear corner at the right side end, in a central portion, in the front-rear direction, at the left side end, or in the front or rear corner at the left side end.

Instead of the pre-charge parts 67 and the discharge parts 68 being provided in close proximity to each other on the upper part (substrate member 51) of the housing case 1, they may be provided apart from each other on the upper part (substrate member 51) of the housing case 1.

The pre-charge parts 67 and the discharge parts 68 may be provided in a lower portion of a front part of the housing case 1 or in a central portion of the front part in the up-down direction, or in a lower portion of a rear part of the housing case 1 or in a central portion of the rear part in the up-down direction, or may be provided in a lower portion of a right side part of the housing case 1 or in a central portion of the right side part in the up-down direction, or in a lower portion of a left side part of the housing case 1 or in a central portion of the left side part in the up-down direction.

### Fifth Modification of Embodiment of Invention

The blowing directions of the fan devices 62 and 63 shown in FIG. 18 may be set to rightward and leftward, and the openings 5f and 5g of the housing cover 5 shown in FIGS. 9 and 10 may be formed in the right and left side faces 5d.

According to this configuration, the fan devices 62 and 63 and the openings 5f and 5g of the housing cover 5 are provided close to each other, and thus air blown out from the fan devices 62 and 63 easily flows out from the housing cover 5 through the openings 5f and 5g of the housing cover 5.

### Sixth Modification of Embodiment of Invention

The fan devices 62 and 63 shown in FIGS. 17 and 18 may be configured to suck air inside the housing cover 5 and blow out the air toward the gaps A1 and A2 (interior of the housing case 1) from the ventilation holes 62a and 63a of the fan devices 62 and 63.

According to this configuration, the air inside the housing case 1 flows out into the housing cover 5 while passing mainly by the terminals 6a of the battery modules 6 and passing through the openings 51a in the substrate member 51.

### Seventh Modification of Embodiment of Invention

The fan devices 62 and 63 shown in FIGS. 17 and 18 may also be provided on the side plate 45 or the bottom plate 47 of the housing case 1 while facing the side portions or the lower portions of the respective gaps A1 and A2.

According to this configuration, when the fan devices 62 and 63 are of a suction type, air inside the housing case 1 is sucked by the fan devices 62 and 63 and is blown into the cover member 12 (see FIGS. 5 and 6), and air inside the cover member 12 is introduced into the housing case 1 from the interior of the housing cover 5 while passing through the openings 5f and 5g in the housing cover 5.

When the fan devices 62 and 63 are of a blowing type, air inside the cover member 12 (see FIGS. 5 and 6) is sucked by the fan devices 62 and 63 and is blown into the housing case 1, and air inside the housing case 1 flows out into the housing cover 5 and flows out into the cover member 12 while passing through the openings 5f and 5g in the housing cover 5.

### Eighth Modification of Embodiment of Invention

In the battery 4, one or two stacks 7 may be provided, or four or more stacks 7 may also be provided. Less than five or at least six battery modules 6 may be coupled to each other to form a single stack 7. A plurality of stacks 7 may be lined up in the left-right direction.

According to this configuration, the number of fan devices 62 and 63 is set to one or three or more according to the numbers of stacks 7 and gaps A1 and A2.

### Ninth Modification of Embodiment of Invention

The front wheels 10 and the rear wheels 11 serve as the travel device of the present invention. Instead of the front wheels 10 and the rear wheels 11, right and left crawler travel devices (not shown) may be provided as the travel device on the body.

### Industrial Applicability

The present invention is applicable to not only a tractor but also another electric work vehicle such as an electric cart and a truck, is applicable to an electric work vehicle in which the battery 4 is installed in a rear portion of the body, and is applicable to an autonomous travel or radio control electric work vehicle with no operator on board.

### Description of Reference Signs

- 1: Housing case
- 3: Driving section
- 4: Battery
- 5: Housing cover
- 5f: Opening
- 5g: Opening
- 6: Battery module
- 6a: Terminal
- 7: Stack
- 10: Front wheel (travel device)
- 11: Rear wheel (travel device)
- 12: Cover member
- 12a: Top face
- 12c: Introduction section
- 14: Inverter
- 21: Lower support member
- 21a: Coupling part
- 22: Lower support member
- 22a: Coupling part
- 23: Upper support member
- 23a: Coupling part
- 24: Upper support member
- 24a: Coupling part
- 40: Upper frame
- 41: First lower frame
- 42: Second lower frame
- 43: Third lower frame
- 51a: Opening
- 62: Fan device
- 62a: Ventilation hole
- 63: Fan device
- 63a: Ventilation hole
- 67: Pre-charge part
- 68: Discharge part
- A1: Gap
- A2: Gap
- M: Motor

## Claims

1. An electric work vehicle comprising: a battery; an inverter configured to be supplied with power from the battery; a motor configured to be driven by power from the inverter; and a travel device configured to be driven by the motor,
wherein the battery includes:
a housing case in which a plurality of battery modules are housed;
a pre-charge part configured to perform processing for gradually supplying power to the inverter at a start of power supply from the battery to the inverter; and
a discharge part configured to perform processing for discharging power remaining in the inverter in response to power supply from the battery to the inverter being shut off, and
the pre-charge part and the discharge part are provided in the housing case.

2. The electric work vehicle according to claim 1,
wherein the pre-charge part and the discharge part are provided in an upper portion of the housing case.

3. The electric work vehicle according to claim 2,
wherein the pre-charge part and the discharge part are provided at a rear end of the housing case.

4. The electric work vehicle according to claim 3,
wherein the housing case is quadrangle-shaped when viewed in a plan view, and
the pre-charge part and the discharge part are provided in a right or left corner at the rear end of the housing case.

5. The electric work vehicle according to any one of claims 2 to 4,
wherein the housing case includes, on a top thereof, a housing cover covering the pre-charge part and the discharge part.

6. An electric work vehicle comprising: a battery; a motor configured to be driven by power from the battery; and a travel device configured to be driven by the motor,
wherein the battery includes:
a stack in which a plurality of battery modules are coupled to each other;
a housing case in which a plurality of the stacks are housed, the stacks being lined up adjacent to each other at a predetermined gap; and
a fan device that has a ventilation hole formed on an outer side of the housing case at a position facing the gap, the fan device being configured to be able to suck air in the housing case or supply air to the housing case via the ventilation hole.

7. The electric work vehicle according to claim 6,
wherein the housing case includes an opening through which air is passable, the opening being provided at a position facing a terminal of the battery modules.

8. The electric work vehicle according to claim 6 or 7,
wherein the plurality of battery modules are coupled to each other while being lined up adjacent to each other to constitute the stack, and
adjacent stacks are provided in a manner such that terminals of the plurality of battery modules in one stack and terminals of the plurality of battery modules in another stack face each other with the gap.

9. The electric work vehicle according to any one of claims 6 to 8,
wherein the plurality of stacks are lined up in a horizontal direction, and
the ventilation hole is provided at a position facing an upper portion of the gap.

10. The electric work vehicle according to claim 9, further comprising a housing cover covering the fan device and an upper portion of the housing case.

11. The electric work vehicle according to claim 10,
wherein the housing cover includes an opening through which air is passable at a position facing a blowing direction or a sucking direction of the fan device.

12. The electric work vehicle according to any one of claims 9 to 11,
wherein the fan device is configured to be able to suck air in the housing case, and
in the one stack adjacent to one side of a central stack and another stack adjacent to another side of the central stack,
a blowing direction of the fan device with respect to the gap between the central stack and the one stack, and a blowing direction of the fan device with respect to the gap between the central stack and the other stack are set as opposite directions so that blown air flows away from each other.

13. The electric work vehicle according to any one of claims 9 to 12, further comprising:
a driving section in which an operator rides and performs driving; and
a cover member that is provided in front of the driving section and includes, in a front portion of the cover member, an introduction section through which external air is introduced, the cover member including a top face formed in a forward-descending shape in which the top face descends toward a front side,
wherein the battery is housed in the cover member, and
a housing cover that covers the fan device and a top of the housing case is provided, and
the housing cover includes a top face formed in a forward-descending shape in which the top face descends toward a front side, and the top face of the housing cover and the top face of the cover member are arranged at a predetermined distance in an up-down direction.

14. An electric work vehicle comprising: a battery; a motor configured to be driven by power from the battery; and a travel device configured to be driven by the motor,
wherein the battery includes: a stack in which a plurality of battery modules are coupled to each other; and a housing case in which a plurality of the stacks lined up adjacent to each other are housed,
the housing case includes: a plurality of lower support members coupled to lower portions of the battery modules; and a first lower frame disposed along a space between adjacent lower support members,
each of the lower support members includes a plurality of coupling parts protruding outward, the plurality of coupling parts being lined up at a predetermined distance, and
adjacent lower support members are arranged in a manner such that the coupling parts of one lower support member enter respective spaces between the coupling parts of the other lower support member, and the coupling parts of the other lower support member enter respective spaces between the coupling parts of the one lower support member, and the coupling parts of the one lower support member and the other lower support member are coupled to the first lower frame.

15. The electric work vehicle according to claim 14,
wherein the coupling parts of the lower support members are tapered with a width thereof decreasing away from the corresponding lower support member when viewed in a plan view.

16. The electric work vehicle according to claim 14 or 15,
wherein the housing case includes a second lower frame disposed parallel to the first lower frame when viewed in a plan view, and
the second lower frame supports connections of the lower support member to the battery modules from below.

17. The electric work vehicle according to claim 16,
wherein the housing case includes a third lower frame disposed orthogonal to the first lower frame and the second lower frame when viewed in a plan view, and
the third lower frame is coupled to the first lower frame and the second lower frame.

18. The electric work vehicle according to any one of claims 14 to 17,
wherein the housing case includes: a plurality of upper support members coupled to upper portions of the battery modules; and an upper frame disposed along a space between adjacent upper support members,
each of the upper support members includes a plurality of coupling parts protruding outward, the plurality of coupling parts being lined up at a predetermined distance,
adjacent upper support members are arranged in a manner such that the coupling parts of one upper support member enter respective spaces between the coupling parts of the other upper support member, and the coupling parts of the other upper support member enter respective spaces between the coupling parts of the one upper support member, and the coupling parts of the one upper support member and the other upper support member are coupled to the upper frame.

19. The electric work vehicle according to claim 18,
wherein the coupling parts of the upper support members are tapered with a width thereof decreasing away from the corresponding upper support member when viewed in a plan view.
